# EUROPEAN PATENT APPLICATION

(11) **EP 1 217 369 A1**
(43) Date of publication of application: **26.06.2002**
(21) Application number: 00660242.9
(22) Date of filing: 22.12.2000
(51) Int. Cl.: G01N 27/74, G01N 21/47, G01N 21/41

(54) **A sensor for measuring paramagnetic gas like oxygen in a mixture**

(71) Applicant: INSTRUMENTARIUM CORPORATION, 00510 Helsinki (FI)
(72) Inventor: Meriläinen, Pekka, 00660 Helsinki (FI); Weckström, Kurt, 02710 Espoo (FI)
(74) Representative: Laako, Tero Jussi

(57) **Abstract**

The invention concerns a sensor for measuring the content of a paramagnetic gas component (Gp) in a gas mixture (Gm). The sensor comprises an inner area (A*) in said sensor and a plurality of gaps (4) in an repetitive array exhibiting successive pairs of said opposite magnetic poles (N and S) with said gap therebetween one after the other along said inner area. The sensor further comprises a radiation source (7) emitting an electromagnetic radiation (R_{E}) towards the inner area (A*), and at least one radiation detector (8) sensitive to said radiation and aimed to said inner area for receiving the diffracted radiation (R_{D}) from a gaseous optical grating (1) effected by a series (10) of magnetic fields (3) in the array of said gaps (4).

## Description

The invention relates to a sensor for measuring the content of a paramagnetic gas component in a gas mixture, the sensor comprising at least one magnet having at least a gap between the opposite magnetic poles of the magnet, and a magnetic field in said gap influencing behaviour of the sample gas mixture. The invention also relates to a method for measuring the content of a paramagnetic gas component in a gas mixture by introducing said gas mixture through a sensor and by detecting the behaviour of said gas component under the influence of a magnetic field. The invention further relates to a procedure for manufacturing magnets having a gap between the opposite magnetic poles thereof and influencing a paramagnetic gas component of a gas mixture in a measuring sensor.

Oxygen is a vital gas for humans, and the oxygen content of respiratory air is determined in many medical applications. This is particularly important in respirator treatment, such as during surgery and in intensive care. Oxygen is also measured in a number of industrial processes, such as for instance in the packaging of foodstuffs in a protective gas. The most commonly used conventional oxygen sensors are based on two physical phenomena.

In an electro-chemical sensor, the oxygen to be determined penetrates a thin membrane into a liquid electrolyte, and acts on the current or voltage between electrodes in the electrolyte. If the construction is devised to be supplied by an external voltage source and to generate a current proportional to the oxygen content, this is called a polarographic sensor. A sensor generating a voltage signal proportional to the oxygen content, which is similar to an electrical battery, is called a fuel cell. Electrochemical sensors can be used once only and have a service life in the range from a few months to two years, depending on their structure and the oxygen content to be measured. This type of sensor typically has a response time of several seconds, even if this time can be reduced at the expense of service life and stability. The basic speed is not sufficient for real-time monitoring of the oxygen curve during inhalation and exhalation, which requires a response time not longer than a few hundred of milliseconds.

Paramagnetic oxygen sensors are based on the relatively high magnetism of the oxygen molecule, which is due to the two electrons of the atom being grouped with unpaired spins on orbits around the nucleus. Among other gases, nitrogen oxides NO and NO₂ are notably paramagnetic, yet they do not interfere with the most frequent oxygen measurements, because they usually occur in negligible concentrations. Simply speaking, paramagnetic oxygen measurement is based on the measurement of the attractive force exerted by a strong static or dynamic magnetic field created with a permanent or electric magnet on the oxygen molecules of the gas mixture. Depending on the form of magnetic field, paramagnetic oxygen sensors can be divided into magneto-static (static field) and magneto-dynamic (dynamic field) sensors. Three principles of production have been adopted on an industrial scale, the oldest ones, the magnet wind cell and the Pauling cell, being magneto-static. A magnetic wind implies the flow of oxygen molecules produced with magnets and their difference of temperature, while the Pauling cell determines the twisting force generated by the pressure exerted by the oxygen molecules on the walls of the hermetically sealed nitrogen gas spheres in a strong magnetic field gradient. The methods were developed in the 1930's and the 1940's. Magneto-static sensors are mechanically sensitive, and their response time is of the same order as that of electro-chemical sensors.

A magneto-dynamic oxygen sensor applies a strong, quickly interrupted electrodynamics field, in which the power effect in the air gap of the magnet makes the oxygen molecules vibrate at the frequency of the current supplied to the magnetic coil. The vibration intensity of the molecules can be determined by means of a double-sided microphone. Because of the losses of the core material of the magnets providing the strongest field, the adopted frequency typically is in the range of ordinary low acoustic frequency, e.g. between 100 and 200 Hz. In terms of the detection principle, these sensors can also be called magneto-acoustic sensors. The chief advantage of a magneto-acoustic oxygen sensor over all other sensors is its rapid response time. This type of sensors have been disclosed for instance in publications US-3,584,499 and US-4,633,705. The sensor described in the latter reference is nowadays widely used in patient monitors in anaesthesia and intensive care. The operating principle of a magneto-acoustic sensor however requires the use of a reference gas, which must admix with the sample gas to be measured within a homogeneous magnetic field. Otherwise it would not be possible to pick a pressure difference signal proportional to the oxygen content difference which arises in a bridge-like flow connection. Under normal conditions, indoor air is perfectly suitable as reference gas, and the differential principle is useful particularly in those special applications requiring very exact measurement of the oxygen contents of two different gases. In order to be operational, the principle also requires a continuous flow of the gas mixture through the measuring cell generated with the pump. In practical implementation, the need for reference gas then implies a more complex structure, a larger size and exact devising of the pneumatic balance of the system. High sensitivity, stability and gas tightness requirements are also posed on the microphone measuring the acoustical signal.

The object of the invention is to achieve a sensor and a method for detecting the concentration of a paramagnetic gas component in a gas mixture enabling a rapid response to variations of the gas component and a long service life of the sensor. The second object of the invention is to achieve a sensor and a method working without a reference gas and optionally without an additional pump. The third object of the invention is to achieve a sensor and a method useful for various applications. The fourth object of the invention is to achieve a sensor which has small size and is not too sensitive to environmental variations. The object of the invention is also to achieve a practical procedure to manufacture the sensor utilizing the developed method.

The above described problems can be solved and the above defined objects can be achieved by means of a sensor according to the invention as defined in claim 1, and by means of a method according to the invention as defined in claim 15, as well as by means of a procedure according to the invention as defined in claim 21.

This invention describes a new principle of measurement based on the paramagnetism of a gas component, that is a magneto-optical measuring, which principle totally differs from those mentioned above. The invention is based on the grouping of the oxygen molecules, or molecules of another paramagnetic gas, present in the gas mixture to be analyzed with a periodical magnetic field on the sensor surface so that a gaseous optical grating is formed in the gas layer in the immediate vicinity of the surface. By illuminating the gaseous grating with e.g. a laser beam, radiation or typically light diffraction is produced, and by placing a radiation or light detector on a point or line corresponding to the diffraction angle, the intensity of diffracted light can be measured. The intensity of the diffracted radiation is a function of the refractive index variation, which in turn depends on the local magnitude of the magnetic field and partial pressure of the paramagnetic gas component, like oxygen. The magneto-optical sensor and measuring method of the invention enable measuring a quickly changing concentration of a gas component reliably in various conditions, ensures long lifetime for the sensor, as well as a simple and small construction of the sensor.

The invention is now described in detail with reference made to the drawings:

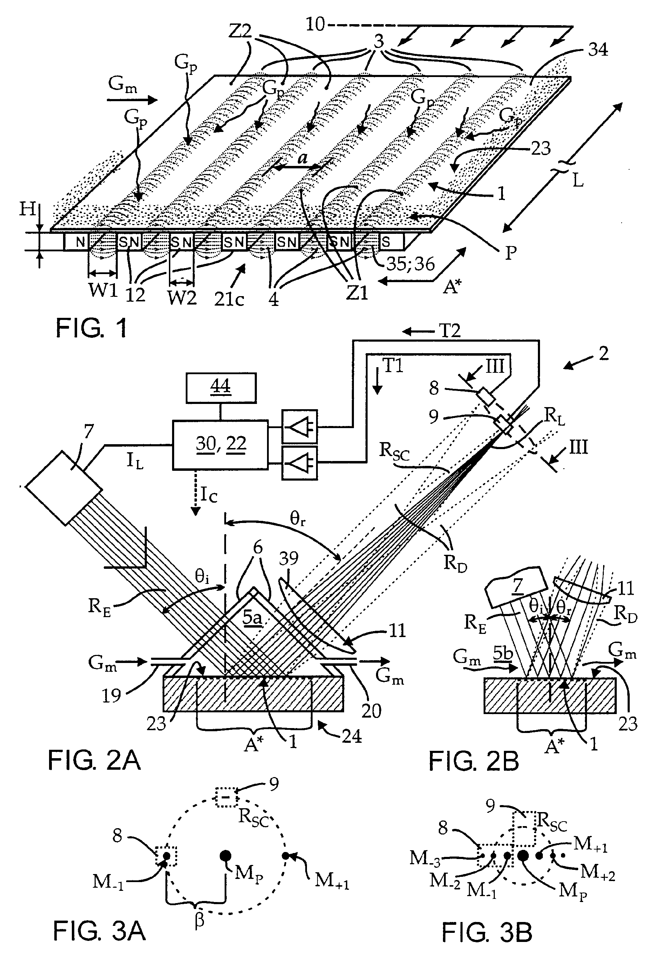

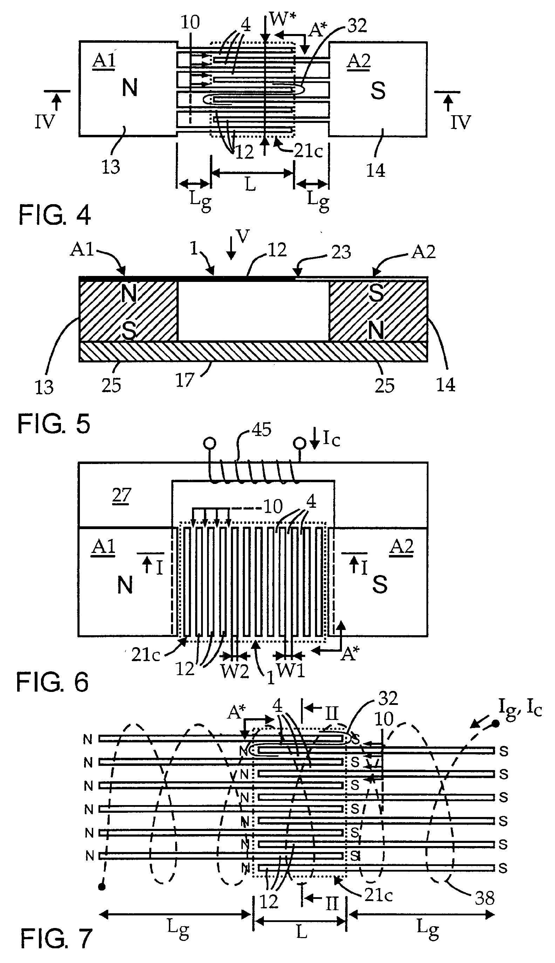

**Fig. 1** illustrates the principle of the gaseous optical grating based on reflection according to the invention in an axonometric view and in a section trough the plane I-I of Fig. 6.
**Fig. 2A** illustrates schematically a first embodiment of the sensor with a sample cavity according to the invention, and the gaseous optical grating of the sensor based on reflection in a section trough the plane II-II of Fig. 7.
**Fig. 2B** illustrates schematically a part of a second embodiment of sensor without a sample cavity according to the invention in the same view as in Fig. 2A.
**Fig. 3A** illustrates schematically the positions of the radiation detectors and diffraction figure in the focal plane III-III perpendicular to the reflected radiation as shown in Fig. 2A. Only one of the first subsidiary maximums is here used for receiving the primary signal for the concentration.
**Fig. 3B** illustrates schematically the positioning of the radiation detectors and the diffraction figure in the focal plane respective to that of Fig. 3A. In addition to a principal maximum and the first subsidiary maximums, the grating may in praxis also form maximums of higher orders, which too are here used for receiving the primary signal for the calculation of the concentration.
**Fig. 4** illustrates schematically a first embodiment of the construction according to the invention for arrangement of the series of magnetic fields in the array of the gaps between the magnetic elements, seen in a direction V of Fig. 5 being perpendicular to the gaseous optical grating based on reflection.
**Fig. 5** illustrates schematically the embodiment of Fig. 4, and a first embodiment of the magnetic connections utilizing e.g. two permanent magnets with a shorting bridge, in a section trough plane IV-IV of Fig. 4.
**Fig. 6** illustrates schematically a second embodiment of the construction according to the invention for arrangement of the series of magnetic fields in the array of the gaps between the magnetic elements, and a second embodiment of the magnetic connections utilizing e.g. one electromagnet with a core, seen in the same direction as in Fig. 4 and perpendicular to the gaseous optical grating based on reflection.
**Fig. 7** illustrates schematically a third embodiment of the construction according to the invention for arrangement of the series of magnetic fields in the array of the gaps between the magnetic elements, and a third embodiment of the magnetic connections utilizing an electrical coil for producing permanently magnetic elements, seen in the same direction as in Figs. 4 and 6 and perpendicular to the gaseous optical grating based on reflection.

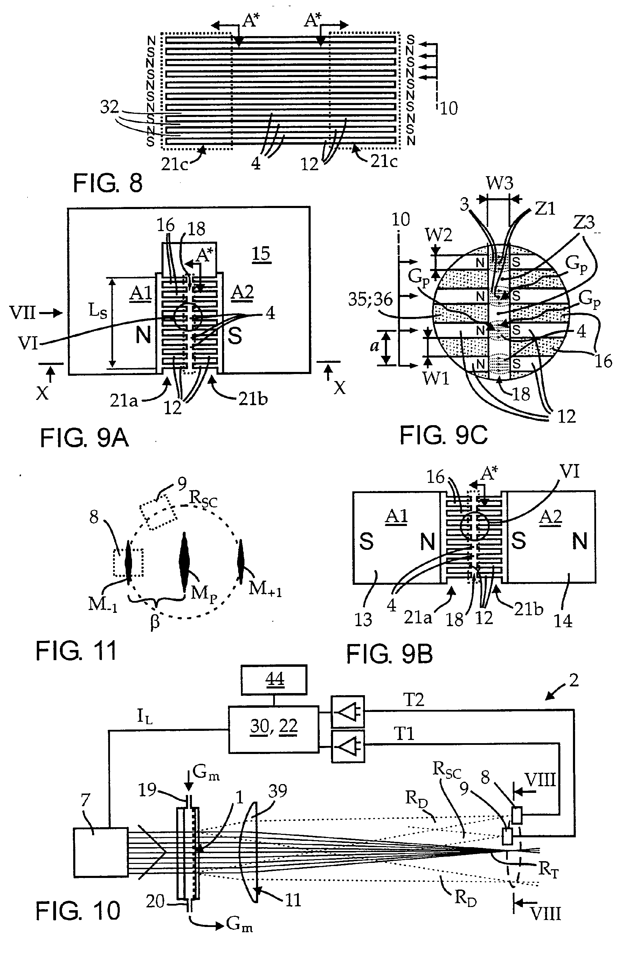

**Fig. 8** illustrates schematically a fourth embodiment of the construction according to the invention for arrangement of the series of magnetic fields in the array of the gaps between the magnetic elements, seen in the same direction as in Figs. 4 and 6 to 7 perpendicular to the gaseous optical grating based on reflection.
**Fig. 9A** illustrates schematically a fifth embodiment of the construction according to the invention for arrangement of the series of magnetic fields in the array of the gaps between the magnetic elements, and a fourth embodiment of the magnetic connections utilizing one permanent magnet, seen in the same direction as in Figs. 4 and 6 to 8 and perpendicular to the gaseous optical grating based on transmission.
**Fig. 9B** illustrates an optically similar embodiment as Fig. 9A, but a fifth embodiment of the magnetic connections utilizing two permanent magnets without a shorting bridge, seen in the same direction as in Figs. 4 and 6 to 9A and perpendicular to the gaseous optical grating based on transmission.
**Fig. 9C** illustrates the magnetic elements, the gaps which form the slit between the ends of the magnetic elements and the spacings between the magnetic elements in an area VI of Figs. 9A and 9B but in a larger scale.
**Fig. 10** illustrates schematically a third embodiment of the sensor with a sample cavity according to the invention in a view analogous to that of Fig. 2A, and the gaseous optical grating of the sensor based on transmission seen in a direction VII of Fig. 9A.
**Fig. 11** illustrates schematically the positions of the radiation detectors and diffraction figure in the focal plane VIII-VIII perpendicular to the radiation passed through the grating shown in Fig. 2A. Only one of the first subsidiary maximums is here used for receiving the primary signal for the concentration.

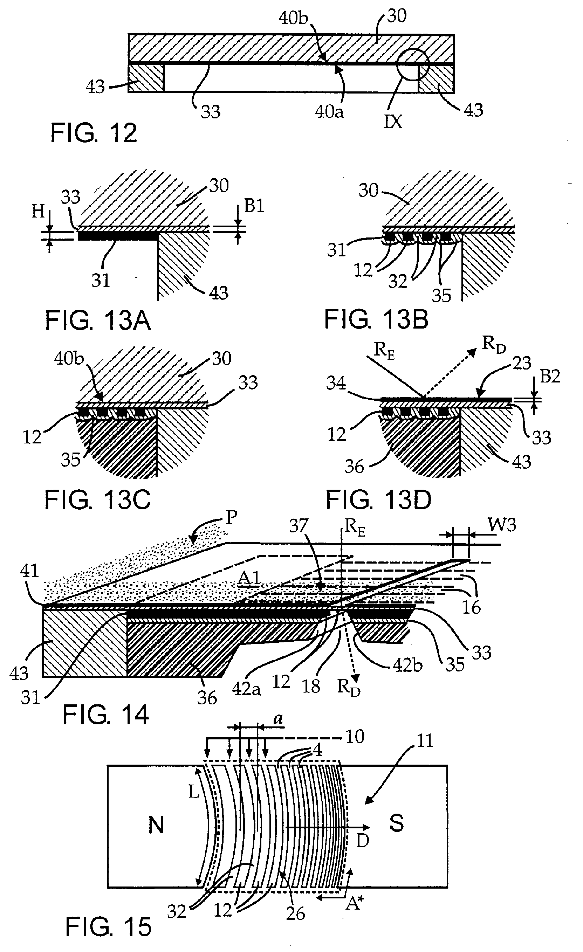

**Fig. 12** concerns manufacturing a series of the magnetic elements for a gaseous optical grating, and illustrates generally a substrate with a first surface of non-magnetic and etch-resistant layer ready for applying a coating of a magnetic material onto the said resistant layer, in a section respective e.g. the plane I-I of Fig. 6, that is in a plane perpendicular to the magnetic elements to be manufactured.
**Fig. 13A** concerns manufacturing a series of the magnetic elements for a gaseous optical grating, and illustrates the substrate and the coating of a ferromagnetic material on said resistant layer, in the area IX of Fig. 12 but shown in a larger scale.
**Fig. 13B** concerns manufacturing a series of the magnetic elements for a gaseous optical grating, and illustrates the substrate, said resistant layer and the coating of a ferromagnetic material with areas of said gaps being etched through, and in this case the volume of the gaps between the magnetic elements and the outer surfaces of the magnetic elements coated with a filling material, in the same view as Fig. 13A.
**Fig. 13C** concerns manufacturing a series of the magnetic elements for a gaseous optical grating, and illustrates previous layer-coating-combination with an added carrying layer material, in the same view as Figs. 13A and 13B.
**Fig. 13D** concerns manufacturing a series of the magnetic elements for a gaseous optical grating, and illustrates the previously disclosed layer-coating-carrying material-combination, in which the second surface of the resistant layer is uncovered - the second surface being opposite to the first surface - by removing the substrate material, and a reflective coating is applied on this second surface, in the same view as Figs. 13A to 13C.
**Fig. 14** illustrates more in detail the gaseous optical grating, partly manufactured as described in Figs. 12-13D, based on transmission according to the invention, in an axonometric view and in a section trough the plane X-X of Fig. 9A.
**Fig. 15** illustrates schematically a sixth embodiment of the invention for arrangement of the series of magnetic fields in the array of the gaps between the magnetic elements, whereupon a virtual spherical mirror is created, seen in the same direction as in Figs. 4 and 6 to 8 and perpendicular to the gaseous optical grating based on reflection.

The basic principle of the invention for measuring the content of a paramagnetic gas component Gp in a gas mixture Gm is enlightened by the array of several magnetic elements 12 having opposite magnetic poles N and S, and several gaps 4 between each of the magnetic elements as shown in Fig. 1. This figure shows within an inner area A* of the sensor a periodical setup or a repetitive array consisting of long micro-sized magnets on the lower surface of a thin film or coating 34 acting as a mirror for the emitted light or radiation R_{E} and making the single set 21c of repetitive magnetic elements with the gaps therebetween in the array as a whole unit non-transparent to the utilized radiation R_{E}, R_{D}. The magnets are magnetized in this case so that one side of each magnetic element 12 - or magnetic bar 12 - has a polarity N and the other side of each magnetic element 12 has polarity S. So the sensor according to the invention comprises a plurality of said gaps 4 in an repetitive array exhibiting successive pairs of said opposite magnetic poles N and S with said gap between the opposite poles one after the other along said inner area A*. The several longitudinal magnetic elements 12 extend between the gaps 4 and provide opposite magnetic poles N and S to each one of the gaps so that magnetic field direction alternates or is the same in successive gaps 4, which may be of a non-ferromagnetic solid material 35 or 36. The inner area A* so includes one set 21c of unidirectionally intermeshing opposite poles with non-ferromagnetic gaps 4 therebetween. Magnetic fields 3 as shown with the field lines are formed in each gap by the opposite magnetic poles N, S, which magnetic fields 3 also widen from the actual gap and extend outside the film or coating 34, that is upwards from the reflective outer surface 23 of the film or coating 34 influencing then the behaviour of the sample gas mixture. It can also be said that the outer even surface 23 is positioned within or below said series 10 of a plurality of magnetic fields. The highest field intensity occurs in the gap between the magnetic elements, but also extends beyond the envelope surfaces via the edges of said elements in both transversal directions. The field shape and strength can be adjusted by means of the width, thickness and mutual distance of the magnetic elements 12. With a view to the operability of the fields 3, the magnetic elements should be optimised in such a way that a sufficient portion of the field 3 penetrates above the film or coating 34.

The molecules of the paramagnetic gas component Gp, because of their physical properties, tends to move towards the magnetic fields 3 from the surrounding gas mixture Gm so that in a gas layer P on top of the outer surface 23 narrow and shallow but long zones Z1 enriched with the paramagnetic gas component Gp are created in the areas of each magnetic field 3. In other words the molecules of the paramagnetic gas component Gp, typically oxygen or possibly NO, NO₂ etc., located within the reach of these magnetic field portion 3 , i.e. in the gas layer P above the film or coating, are subject to a force that attracts a great number of e.g. oxygen molecules from the gas mixture, the number being a function of the product of the intensity and the gradient of the magnetic field. In this situation, excess paramagnetic gas component accumulates - concentration of the paramagnetic gas component increases - in the first zones Z1 on top of the gaps 4 with the magnetic fields 3 relative to the second zones Z2 on top of the magnetic elements, which second zones evidently include the gas mixture Gm as such, i.e. not substantially decreased concentration of the paramagnetic gas component. Since the gas density increases within said first zones Z1 because of the magnetic fields 3, its refractive index also increases, and an internal phase difference will arise in the monochromatic light wave reflected from the surface 23, resulting in the phenomenon known as diffraction. This means that, besides direct reflection R_{L}, also weaker rays are diffracted R_{D} from the surface at angles whose deviation β from the direct mirror-reflective direction depends on the magnitudes of the light wavelength and the center-to-center separation ***a*** of the grating 1. One could state that the plurality of magnets with poles N, S arranged as a series 10 of magnetic fields 3 in the array of said gaps 4 creates a gaseous optical grating 1 with preferably constant periods, whereupon the intensity of the diffracted radiation R_{D} is dependent on the concentration of the paramagnetic gas component, like oxygen, of the gas mixture Gm flowing over the active outer surface 23. This disclosed type of the gaseous optical grating 1 functions as a reflective grating and is a line grating, because the diffractive elements, i.e. the zones Z1 and Z2, have a configuration of a series 10 of lines. Its application in a sensor is illustrated in Figs. 2A and 2B. It is believed that the reflective gaseous optical grating 1, described above, offers higher optical effectiveness - and perhaps also other advantages - than the transmitting gaseous optical grating 1, described below, and is so the preferred type.

The same inventive principle as described above can also be used to produce a gaseous optical grating 1 of a type which functions as a transmissive grating, and the application of this type in a sensor is illustrated in Fig. 10. In this case the basic principle of the invention for measuring the content of a paramagnetic gas component Gp in a gas mixture Gm is enlightened by the array of several magnetic elements 12 having opposite magnetic poles N and S, and several successive gaps 4 between each of the magnetic elements as shown in Fig. 9C and Fig. 14. The structure of the transmissive grating 1 has all the features described in the previous chapter, only the reflective outer surface 23 is not necessary, and possibly harmful depending on the constructional features of the sensor. Instead the outer surface 37 of the transmissive grating should be preferably non-mirror-reflective, so in fact at least diffusively reflective and/or at least partly absorbing of the coming emitted light or radiation R_{E}. According to invention the plurality of said gaps 4 between the opposite magnetic poles N and S are a single continuous slit 18 transparent to said radiation R_{E}, R_{D}. This kind of structure is attained by two sets of magnetic elements 12, which are typically identical with each other and may have the same outlook as the one set or array of the reflective grating 1. The first set 21a of the several magnetic elements 12 is on the one side of the slit 18 and the second set 21b of several magnetic elements 12 is on the other side of the slit so that the ends of the magnetic bars or elements 12 are opposing each other, and both sets 21a, 21b and the slit 18 are within the inner area A*. The two sets 21a, 21b have a pole facing an opposite pole on the other sides of the slit 18. The slit 18 is transparent to the utilized radiation R_{E}, R_{D}, but can be materially closed or materially open. In this case the magnetic elements 12 in both sets 21a, 21b have spacings 16 therebetween, which spacings may be of a non-ferromagnetic solid material 35 or 36 just like the gaps 4 between the magnetic elements in the reflective grating described above. Each magnetic element in the first set 21a provides a magnetic pole N or S to the slit and each facing magnetic element in the second set 21b provides an opposite magnetic pole N or S to the slit. In this way there is always opposite poles facing each other at both sides of the slit 18, whereupon a series 10 of magnetic fields 3 along the slit 18 is formed, as shown in Fig. 9C. There can be only one type of poles N or S on one side of the slit, as shown in Fig. 9C, but the polarities can alternate along the slit if only opposite poles are facing each other on the opposite sides of the slit. The electromagnetic radiation R_{E} is allowed to transmit through the slit 18 including the series 10 of magnetic fields 3.

In this arrangement too, the molecules of the paramagnetic gas component Gp, because of their physical properties, tends to move towards the magnetic fields 3 from the surrounding gas mixture Gm, or from a layer P of said flowing gas mixture on the active outer surface 37, so that small volumetric first zones Z1 enriched with the paramagnetic gas component Gp are created in each magnetic field 3 in and around the slit 18. Further the excess paramagnetic gas component accumulates - concentration of the paramagnetic gas component increases - in the generally distorted globular first zones Z1 between the elements 12 relative to the third zones Z3 between the opposite spacings 16, which zones Z3 evidently include the gas mixture Gm as such, i.e. not substantially decreased concentration of the paramagnetic gas component. Since the gas density increases within said first zones Z1 because of the magnetic fields 3, its refractive index also increases, and an internal phase difference will arise in the monochromatic light wave passing the slit 18, resulting in diffraction. As a consequence, besides direct transmitted radiation R_{T}, also weaker rays are diffracted R_{D} from the slit at angles whose deviation β from the direct transmitted direction depends on the magnitudes of the light wavelength and the center-to-center separation ***a*** of the grating 1. Also in this case the plurality of magnets with poles N, S arranged as a series 10 of magnetic fields 3 in the array of said gaps 4 creates a gaseous optical grating 1 with preferably constant periods, whereupon the intensity of the diffracted radiation R_{D} is dependent on the concentration of the paramagnetic gas component, like oxygen, the gas mixture Gm flowing over the surface 37 and the slit 18 and its surrounding. This disclosed type of the gaseous optical grating 1 functions a point grating, because the diffractive elements, i.e. the zones Z1 and Z3, have a configuration of a series 10 of points.

Representative embodiments of the overall structure of the sensor 2 is shown in Figs. 2A and 2B as well as in Fig. 10. The sensor 2 of Fig. 2A comprises a housing 24, which is shown only partly and schematically, and a measuring cavity 5a inside the housing. The measuring cavity 5a is provided with an input conduit 19 for supplying sample gas mixture Gm into the cavity, and an output conduit 20 for exiting of the sample gas mixture from said cavity. This measuring cavity 5a has an inner area A* with the series 10 of magnetic fields 3 for creating the gaseous optical grating 1 which is described above. In this case the cavity 5a is provided with two windows 6, one of the windows between said inner area A* and the radiation source 7 for the emitted radiation R_{E}, and another of the windows between said inner area A* and the radiation detector 8 or detectors 8, 9 for the diffracted radiation R_{D}. It shall be understood that the cavity 5a may be provided with only one window which serves for passing of both the emitted radiation R_{E} and the diffracted radiation R_{D}, or the measuring cavity 5a may be without any windows, whereupon the radiation source 7 and the radiation detector 8 or detectors 8, 9 are built-in e.g. on the inner surface of the cavity wall. A sensor with a measuring cavity 5a may be used e.g. in the so called "main-stream" application, in which the measuring chamber or cavity is connected directly to the airways of a patient during the measurement of the patient's respiratory gases, or in the so called "side-stream" principle, in which a small gas sample is pumped to the sensor located remote from the main airways of the patient. A sensor 2 according to the invention with the measuring cavity 5a can also be used in many other applications, for instance for measuring exhaust gases in industry or exhaust gases of vehicles, like cars or ships etc. Alternatively the sensor 2 of the invention can be without any actual cavity, but instead comprise an open room 5b, as shown in Fig. 2B, whereupon said inner area A* with the series 10 of magnetic fields 3 is freely accessible by the gas mixture Gm from the surrounding environment. The sensor 2 with an open room 5b, i.e. with open inner area A* without walls, may be used e.g. in environmental control for measuring the content of a paramagnetic gas component Gp in air or any other gas mixture Gm which is present in a larger or not strictly limited volume. Under these circumstances the natural movements of the gas mixture, caused e.g. by wind or temperature differences, create the necessary flow and exchange of the gas mixture over the active surface 23 or 37 of the series 10 of magnetic fields 3.

The sensor 2 further comprises a radiation source 7 emitting a beam of an electromagnetic radiation R_{E}, typically light, towards said inner area A*, and at least a first radiation detector 8 sensitive to said radiation and aimed to the inner area A* for receiving the diffracted radiation R_{D} from the gaseous optical grating 1. The emitted radiation R_{E} shall be substantially monochromatic or quasimonochromatic and if possible have at least a noticeable temporal coherence, but spatial coherence is not needed and hardly available, either. An ideal monochromatic radiation is not required, instead an emission band narrow enough is acceptable, but the narrower the emission band is the higher is the optical effectiveness of the grating and detection sensitivity, and so a diode laser, which may be e.g. of the inexpensive type used in CD-recorders or laser indicators, is very practical and efficient enough. Also a light emitting diode (LED) may be useful, but evidently with a lower efficiency and measuring accuracy. Actual lasers, like gas lasers, are of course effective, but expensive and quite too large in most applications. The wavelength λ or more precisely the wavelength band of the emitted radiation R_{E} should be selected to be between 500 nm and 1000 nm in order to be practical. If needed some other wavelength can be selected. The sensor also comprises at least a first radiation detector 8 sensitive to said radiation and aimed to said inner area for receiving the diffracted radiation R_{D} from a gaseous optical grating 1. The initial reflected and passed radiation R_{L}, R_{T} is not detected, but the diffracted radiation R_{D} from the grating 1 emerges to a small-sized first radiation detector 8, such as a light sensitive diode or transistor. This operating principle ensures a very rapid response time in the measurement. Since these type of light detectors are very rapid, the actual response time will be determined by the rate at which the gas mixture Gm is exchanged on active surfaces 23, 37 the grating 1 formed by the series 10 of the magnetic fields 3, which happens very fast owing to the small volume within reach of the magnetic fields.

The sensor 2 may further comprise optical means 11 concentrating or gathering the diffracted R_{D} and transmitted or reflected radiation R_{T}, R_{L}, which optical means are typically a convex lens 39 of a refractive material positioned between the gaseous grating 1 and the first detector 8 and the optional second detector 9, as shown in Figs. 2A, 2B and 10. The optical means 11 concentrating said reflected or passed and diffracted radiations R_{L}, R_{T}, R_{D} may also be provided by forming the reflective surface 23 as a concave mirror, not shown in the figures, or provided by forming the several magnetic elements 12 with the plurality of gaps 4 to have a generally concentrically curved configuration, actually sections of concentric circles, that is a series 10 of successive arches, as shown in Fig. 15, whereupon a virtual concave mirror 26 concentrating the diffracted radiation is formed by said magnets. In this case the gaps 4 have a variable width W1 and/or a variable interval W2 in direction from one pole N or S to the opposite pole S or N, but substantially constant width W1 and interval W2 along their length L. The important feature here is that the center-to-center grating separation ***a*** is continuously decreasing, i.e. the grating separation ***a*** is variable, in the direction D from the center of the curvature towards the outer periphery, which feature may be attained also using a constant width W1 in direction from one pole to the opposite pole.

After the emitted radiation R_{E} is diffracted by said gaseous optical grating 1, either of the reflective type or the transmissive type, the intensity of at least one subsidiary maximum M₋₁, or M₊₁ of said diffracted radiation R_{D} originating at said layer of the gas mixture is detected by said first detector 8. For this purpose the first radiation detector 8 is positioned at the point of a subsidiary maximum M₋₁, or M₊₁. Figs. 3A and 11 show the use of the first subsidiary maximum M₋₁, but the opposite first subsidiary maximum M₊₁ would give somewhat greater diffraction deviation, especially if there is room in the sensor to use a greater angle of incidence θ, this is the case when considering a sensor with reflective gaseous optical grating 1. When the angle of incidence θᵢ is 45°, the wavelength λ is 670 nm and there is 20 lines/mm in the grating 1, both M₋₁ and M₊₁ give approximately the same deviation β of 1.1° from the angle of reflection θᵣ (θᵢ =θᵣ=θ). But if the angle of incidence is 70° M₋₁ gives a deviation of 2.1° and M₊₁ a deviation β of 2.4°. Accordingly it can be preferable to utilize a large angle of incidence θ, whereupon the angle of 80° gives at M₋₁ a deviation β of 3.7° and at M₊₁ a deviation β of even 6.5°. A problem caused by large angles of θ is the necessity to use polarized radiation so that the polarization plane is perpendicular to the length L of magnetic elements 12 and the magnetic fields 3 (TM polarization). It is also possible to detect the intensities of two or more subsidiary maximums of the diffracted radiation, but typically only on one side of the principal maximum M_{P}, that is the point of reflected or passed radiation R_{L}, R_{T}, which are not measured. For this alternative the first radiation detector 8 is positioned at the area of two or more subsidiary maximums M_{-1, 2, 3...}, or M_{+1, 2, 3...} of the diffracted radiation R_{D}, as shown in Fig. 3B. The intensity of the first subsidiary maximum M₋₁ or M₊₁, or the intensities of two or more the subsidiary maximums M_{-1, 2, 3...}, or M_{+1, 2, 3...} are utilized in the similar way also in the version of the invention including the transmissive gaseous optical grating 1. The content of the paramagnetic gas component Gp is then calculated in the calculating means 22 or processor using the signal T1 dependent on the intensity of the subsidiary maximum(s) as initially received from at least the first detector 8.

The order of magnitude of the increase in paramagnetic gas density can be estimated by implementing the formulas and estimates presented in the article: Pekka T. Meriläinen - A Differential Paramagnetic Sensor for Breath-by-Breath Oximetry; Journal of Clinical Monitoring, Vol. 6, No. 1, January 1990. By examining a gap having a width of 2 µm with a magnetic field 3, which has been obtained with a saturation flux density of 2 Wb/m², an increase in gas density of the order of 20% is obtained with pure oxygen, i.e. a pressure difference of 200 mbar between the gas within and outside the magnetic field, that within the first zone Z1 as compared to that within the second or third zone Z2, Z3. With this pressure difference, the optical refractive index of the gas will vary only by the factor 1.00005. However, current light detectors are extremely sensitive, and even diffraction intensities caused by such a small variation can presumably be measured also with low oxygen contents. Gaps with a smaller width W1 between opposite magnetic poles N, S do have a higher field strength, which increase the difference between refractive indexes.

For the described principle and solution to be operational, it is vital that the outer mirror-reflective surface 23 of the gaseous grating 1 and the possible windows of the measuring cavity and/or the windows of the detectors 8, 9 be optically flawless and remain clean. Dirt accumulating onto any of these surfaces causes scattering of incident light, i.e. stray light, part of which may hit the first detector 8 measuring the actual intensity of the subsidiary maximum or maximums. Since this results in an erroneous increase in the signal T1 concerning concentration of the paramagnetic gas component Gp, it must be possible to compensate for this phenomenon. This can be done by measuring - receiving signal T2- the stray light/radiation with a reference or second detector 9 preferably at a location on the same conical surface as the diffracted ray R_{D}, with a directly reflected ray R_{L} or a transmitted ray R_{T} acting as the axis, but at a location different from the measuring first detector 8. This positioning is visible in Figs. 3A, 3B and 11, in which the transversal section of this cone is seen as a circle running through the first subsidiary maximums and having the principal maximum M_{P} as the center point, the principal maximum M_{P} and subsidiary maximums M_{-1,2,3...}, M_{+1,2,3...} form a line with more or less widened intensity maximums, and the second detector 9 is positioned elsewhere preferably at the circle. Then the part of the stray light is taken account in the utility signal e.g. by subtracting the reference signal T2 from the measuring signal T1. The second radiation detector 9 is also sensitive to the radiation R_{E} and R_{D}, and generally the second detector is positioned to receive the scattered radiation R_{SC} outside the principal maximum M_{P} and the subsidiary maximums M₋₁, M₋₂ etc., or M₊₁, M₊₂ etc. of the diffracted radiation. The value initially detected from the subsidiary maximum or maximums the initially calculated content of the paramagnetic gas component is then corrected using the reference signal T2. For these calculations can be used any known or new mathematical procedures, and accordingly they are not described more in detail in this text.

For a reflective gaseous optical grating 1 the bar-like magnetic elements 12 can have any of the following structure, configuration and connections. In the embodiment of Fig. 4 a first group of narrow bar-like magnetic elements extend from the first end area A1 towards the second end area A2, and a second group of narrow bar-like magnetic elements extend from the second end area A2 towards the first end area A1, and the bar-like elements 12 of the first group extend between the bar-like elements 12 of the second group and vice versa forming the single set 21c of elements with gaps 4, which consists of a non-ferromagnetic material, between each bar-like magnetic element 12 successive in the direction perpendicular to the length L of the elements. A solid non-ferromagnetic material 35 or 36 is preferably used in the gaps of the reflective gaseous optical grating 1 in order to attain a strength for the grating, in principle the gaps 4 can be without any solid material and instead be filled with any gas or liquid, which does not affect the magnetic fields 3. Each of the end areas A1, A2 is directed away from said inner area A* of the intermeshing magnetic elements. The area in which the bar-like elements 12 of the first group and the second group are intermeshing is the inner area A*. In the embodiment of Fig. 7 the arrangement of narrow bar-like magnetic elements 12 is similar to that of Fig. 4, as described above, but there are no end areas. It is important that the magnetic elements of the first group extend to one direction and the magnetic elements of the second group extend to the opposite direction outside the inner area so that the elements 12 of both groups have a length portion Lg without the elements 12 of the other group therebetween. Each of these groups have one type on polarity, either N or S within the inner area A*, which polarity is created by magnetic conduction along the bar-like magnetic elements 12. In the embodiment of Fig. 6 the narrow bar-like magnetic elements 12 separate from each other are positioned side by side and successive in the direction perpendicular to the length L of the elements. In this case the first end area A1 and the second end area A2 are separate parts having placed as a continuation of the row of the successive magnetic elements 12 at both end sides of the single set 21c. So the positioning of the end areas A1, A2 is analogous to the positions of the bar-like elements, but have substantially larger area. Each of the magnetic elements 12 have one pole, either N or S, on one longitudinal side and the opposite pole on the opposite side thereof in the direction perpendicular to the length L of elements within the inner area A*, which polarities are created by magnetic induction from a bar-like magnetic element 12 to another. Fig. 8 shows an example, in which the bar-like magnetic elements 12 have longitudinal magnetism, that is opposite poles N, S at their opposite ends, and these magnetic elements are placed one after the other so that concerning the ends of elements the successive elements have opposite poles. In this case there is actually two single sets 21c of the magnetic elements and two inner areas A*. The inner areas A* of the various embodiments are marked in the figures with dashed lines.

Concerning the reflective gaseous optical grating 1, in the series 10 of magnetic fields 3 the width W2 of the individual magnetic elements 12, the thickness H thereof and the width W1 of the successive gaps 4 between the individual magnetic elements 12 as well as the grating separation ***a*** are each typically at least 2 µm and at maximum 200 µm, and preferably in the range of 10 µm to 100 µm and their length L is in the order of 0.5 mm to 3 mm. The number of magnetic elements 12 is selected so as to obtain a structure having also a total width W* between 0.5 mm and 3 mm. The several magnetic elements 12 and the plurality of gaps 4 have typically, in a less complicated type, a linear configuration and are parallel to each other, whereupon the gaps 4 have a substantially constant width W1 and a substantially constant interval which is same as the width W2 of the magnetic elements 12.

For a transmissive gaseous optical grating 1 the bar-like magnetic elements 12 can have any of the following structure, configuration and connection. In the embodiment of Figs. 9A to 9C and 14 there is a first set 21a of e.g. bar-like magnetic elements 12 with a spacing 16 between each of elements, and a second set 21b of e.g. bar-like magnetic elements 12 with a spacing 16, which spacings consists of a non-ferromagnetic material, between each of elements. The spacings 16 develop here the grating separation ***a*** in the slit 18, which is a radiation transparent long formation between the ends of magnetic elements facing each other on the opposite longitudinal sides 42a, 42b of the slit 18. A solid non-ferromagnetic material 35 or 36 is preferably used in the spacings of the transmissive gaseous optical grating 1 in order to attain a strength for the grating, in principle the spacings 16 can be without any solid material and instead be filled with any gas or liquid, which does not affect the magnetic fields 3. The slit has a width W3 between the end of the elements 12. This construction comprises a first end area A1 common to the first set 21a of the magnetic elements 12, and the second end area A2 is common to the second set 21b of the magnetic elements 12. There is no intermeshing of the magnetic elements, but their position opposite each other as described.

Concerning the transmissive gaseous optical grating 1, in the series 10 of magnetic fields 3 the width W2 of the individual magnetic elements 12 and the width W1 of the successive gaps 4 between the magnetic elements 12 as well as the grating separation ***a*** are each at least 2 µm and at maximum 200 µm, and preferably in the range of 10 µm to 100 µm. The thickness H of the magnetic elements 12 can be the same as their widths W2, but can be in this case also larger up to 1 mm. The number of magnetic elements 12 is selected so as to obtain a total slit length L_{S} between 0.5 mm and 3 mm. The slit 18 shall preferably have a linear configuration and a constant width W3 which is larger than 0.02 mm and smaller than 0.5 mm, preferably between 0.05 mm and 0.2 mm. Also the gaps 4 may have substantially constant widths W1 and intervals which latter is same as the width W2 of the magnetic elements 12.

For the embodiments of the invention disclosed in Figs. 4 to 7 and 9A to 9B the magnetic elements 12 can be prepared of a magnetic material 31 being a soft magnetic material. In the generally used terminology, the definition "soft magnetic material" intends a ferromagnetic material with a coercivity *H*_{*C*} *≤* 10 A/cm (12.6 Oe). The magnetic fields 3 between this kind of elements 12 are produced - i.e. the bar-like elements are magnetized - by attaching e.g. separate permanent magnets 13, 14 in contact with the end areas A1, A2 so that for instance the north pole N of the first permanent magnet 13 is in contact with the first end area A1, and the south pole S of the second permanent magnet 14 is in contact with the second end area A2, or vice versa. This alternative is visible in Fig. 4 and similar to the structure of Fig. 5 if the bar 17 omitted, whereupon the direction N<->S between poles is transversal as compared to the plane of magnetic elements and the reflective surface 23 or the non-reflective surface 37. It is also possible to position the permanent magnets 13, 14 so that both opposite poles N and S are in contact with the end areas A1 and A2 respectively, but directing the north pole N of the first magnet 13 towards the magnetic elements 12 in their level and the south pole S away from the elements, and in an analogous way the south pole S of the second magnet 14 towards the magnetic elements 12 in their level and the north pole N away from the elements, as is illustrated in Fig. 9B. Evidently stronger magnetic fields are reached by connecting those ends 25 of the permanent magnets 13 and 14 facing away from the end areas A1, A2 with a bridge 17 consisting of a soft magnetic material, which alternative is shown in Fig. 5. Effectively the same function as using two permanent magnets 13, 14 and the bridge 17 is attained by using a single permanent magnet 15 which have a form of a letter U or C or the like, the ends of which having opposite poles N and S are attached to be in contact with the end areas A1 and A2. This kind of construction can be seen in Fig. 9A. A further alternative to magnetize the bar-like elements to produce the magnetic fields 3 is to use an electromagnet, which comprises a core 27 of a soft magnetic material and a surrounding coil 45, in which an electrical current I_{C} is fed. The core may have a form of a letter U or C or the like, the ends of which are attached to be in contact with the end areas A1 and A2. This alternative is visible in Fig. 6. A still further alternative is shown in Fig. 7, in which the set 21c of bar-like magnetic elements 12 with the gaps 4 is positioned inside a coil 38 extending considerably outside the inner area A* to surround those portions Lg of the first and the second group of magnetic elements which are not intermeshing in respect to elements of the other group, as described earlier. When an electrical current I_{C} is fed into the coil 38 the magnetic elements 12 acts as the core of the magnet, and are magnetized to have opposite polarities within the inner area A*. The coil 38 shall be transparent to radiation R_{E}, R_{D} at least for the inner area A* when used in this mode, in which the coil is part of the sensor 2. This requirement can be fulfilled be making a coil 38 with two parts, in which the major part of the windings are within the outwards extending length portions Lg of the magnetic elements, and only a connection wire crossing the inner area A* e.g. behind the gaseous optical grating 1.

For the embodiments of the invention disclosed in Figs. 7 and 8 the magnetic elements 12 can be prepared of a magnetic material 31 being a hard magnetic material, which elements are magnetized prior to use to form a plurality of permanent magnets, which are said elements 12. In the generally used terminology, the definition "hard magnetic material" intends a ferromagnetic material with a coercivity *H*_{*C*} ≥ 100 A/cm (126 Oe), and these are permanent magnets when in magnetized state. One alternative is shown in Fig. 7, in which the set 21c of bar-like magnetic elements 12 with the gaps 4 is positioned inside a coil 38 extending considerably outside the inner area A* to surround those parts of the first and the second group of magnetic elements which are not intermeshing in respect to elements of the other group, as described earlier. When an electrical current Ig is fed into the coil 38 the magnetic elements 12 acts as the core of the magnet, and are magnetized permanently to have opposite polarities within the inner area A*. The difference as compared the possibility described in the previous chapter is that here a hard magnetic material is used and the magnetization is performed beforehand with a current Ig and the coil removed, prior to assembly of the sensor. Because of this there are no requirements concerning the transmittance of the coil 38, in this case.

Instead of using permanent magnets as described above, it would be advantageous to utilize soft magnetic material in the magnetic elements 12 and an electromagnet 27 & 45 or 38 for magnetizing the elements 12. The dynamic form of measurement has the advantage of offering the possibility of compensating background light or radiation without a supplementary detector. As the magnetic field is switched off, the gaseous optical grating 1 disappears and the radiation detector(s) 8 and/or 9 detects only the stray light/radiation from the surroundings. For this purpose the sensor 2 further comprises current source means 30 for providing a chopped DC-current I_{C} with a frequency ω to said electromagnets, whereupon the magnetic elements 12 are periodically magnetized, and means 22 for processing the signal(s) T1 and/or T2 at least from the first radiation detector 8 or possibly also from the second detector 9 with a frequency ω respective to said chopping. The calculation procedure in the calculating means 22 is performed in a way synchronized with the chopping frequency ω known as such. For calculation can be used any known or new mathematical procedure, and accordingly it is not described more in detail. Component 44 in the figures described a display, a printer or other output unit. Also in this case when the background radiation is detected during the time periods with no magnetic fields 3 in the gaseous optical grating 1, the stray light/radiation caused by dirt accumulation shall be detected, if otherwise necessary, by the second detector 9. The current source means 30 also provide a voltage and an electrical current I_{L} to the radiation source 7, which current can also be a chopped current having a frequency ω_{L} in case the magnetic elements 12 are permanent magnets, whereupon the background radiation or light can be detected during those periods when no emitted radiation R_{E} is present. The stray radiation cannot be detected by this way.

The procedure for manufacturing a plurality of magnetic elements 13 having the required small dimensions described earlier in this text comprises e.g. the following steps and materials. At first it is needed a substrate 30 with a non-ferromagnetic layer 33 resistant to etching thereon, said layer having a first surface 40a accessible. One known combination for this purpose is to use so called double-layer silicon disc of the SOI type (Silicon-on Insulator), but other kind of starting materials can also be used. The substrate 30 can be any material which can be etched by some proper liquid or by some other means, but at least silicon and germanium are practical material for this purpose. The non-magnetic layer 33 resistant to etching can be any first non-ferromagnetic - in this disclosure the definition "non-ferromagnetic" also excludes all ferrimagnetic materials - material which can be produced on the substrate with as small a thickness B1 as possible and have so dense an internal structure that it is etch-resistant in spite of its small thickness. The non-magnetic layer 33 is preferably also electrically insulating. The thickness B1 of the layer 33 shall be smaller than 10 µm, but preferably smaller than 5 µm, and if possible smaller than 2 µm. This non-magnetic layer 33 insulating and resistant to etching can be an oxide, a carbide, or a nitride of silicon or germanium, or aluminium oxide. Oxide, nitride and carbide layers can be produced on a substrate at least electrolytically, chemically in a liquid and in a proper atmosphere using specified temperatures. In principle also a layer of a polymer may be useful as the layer 33 resistant to etching, which kind of layer can be produced by applying, either as such or as a solution including a vaporizing solvent, a monomer, or a partly polymerized material, which are polymerized with chemical activator or with a selected radiation, or a final polymer in said solution. If the SOI disc is used the major portion of the silicon on one side of disc is removed by chemical etching until the oxide layer is bare and accessible, whereupon the disc has the cross-section shown in Fig. 12 having a supporting frame 43 of silicon. If some other type of substrate 30 with a layer 33 resistant to etching is used, it can be necessary to attach a separate supporting frame 43 to this layer 33 along the edges of the substrate. The magnetic elements 12 with the gaps 4, that is the inner area A*, is then processed on the center area within the frame.

Next a coating 31 of a ferromagnetic material or alloy - in this disclosure the ferrimagnetic materials are considered to be ferromagnetic materials, and so definition "ferromagnetic" includes all "ferrimagnetic" materials - is applied on said first open surface 40a of said resistant layer 33. Fig. 13A shows the substrate and the resistant layer with the deposited coating 31 of the ferromagnetic material. Whether a soft magnetic material or a hard magnetic material, all of which are metal alloys, is to be used, the material/alloy composition in question is applied on the first surface utilizing any method which enable the proper composition and grain structure in the magnetic material coating 31. The thickness H of the ferromagnetic material 31 shall be at least 2 µm but may be up to 1 mm. A magnetic material having greater thickness creates a stronger magnetic field supposed the other dimensions, properties and values are identical, and so a thickness H of at least 20 µm is preferred. At least some of the gas phase deposition techniques, and some of the liquid phase deposition techniques are useful for preparing this coating, but also silk screen printing may be acceptable. Concerning the gas phase deposition techniques, at least thermal evaporation is useful and especially so called flash evaporation maintains the composition of the alloy material as do evidently the ion plating technique. Further the sputtering is widely acceptable for this stage of coating. The above describe gas phase processes are generally called as a physical vapour deposition (PVD), which include also different other methods and further specialized techniques, some of which may be useful. Another group of gas phase deposition techniques is chemical vapour deposition (CVD) which may have some limitation concerning the alloy composition. There is also combinations of CVD and PVD processes. Concerning the liquid phase deposition techniques, the electrolytic deposition and the electroless deposition evidently are not very practical, because the layer 33 resistant to etching is generally not an electrical conductor, though some magnetic alloys can be transferred in this way effectively. Liquid phase deposition techniques include also different other methods and further specialized techniques, about which at least growth from solution and growth in gels shall be mentioned. The deposition techniques are known and one of those commercially available can be selected, or a new version can be developed.

Soft magnetic materials are widely known, commercially available and we list here only some of them, like pure iron, iron-silicon alloys, iron-aluminium- and iron-aluminium-silicon alloys, nickel-iron alloys, iron-cobalt alloys etc. Any of these can include further alloying elements like titanium, niobium, molybdenum, boron, copper etc. Most of these alloys are present in a crystalline structure, but it is possible to produce also amorphous ferromagnetic materials, like MnZn and NiZn ferrites, (Fe,Co,Ni)₈₀(P,B,Al,Si,C)₂₀ alloys and Fe₈₂B₁₀Si₈ alloys. It is also possible to deposit nano-crystalline film on the first surface 40a (see: WTEC Panel Report on Nanostructure Science and Technology, Chapter 6: Carl Koch - Ferromagnetic Nanostructured Materials; Loyola College, Sept. 1999). The soft magnetic material is selected considering both the magnetic properties and how the material can be deposited onto the first surface to form a coating 31. Hard magnetic materials are also widely known, commercially available and we list here only some of them, like iron-cobalt alloys, so called Alnico alloys, iron-cobalt-lead alloys, MO.6Fe₂O₃ ceramics, in which M is one or more of barium, strontium and lead, R-Co·x, in which x is one of special integers and R represent one or more of the rear earth metals, SmCo₅, Sm(Co,Cu)_{7.5}, Sm₂Co₁₇, neodymium iron borate (Nd₂Fe₁₄B), elongated single-domain (ESD) magnets etc. The hard magnetic material is selected considering both the magnetic properties and how the material can be deposited onto the first surface as a coating 31 in case it is used for magnetic elements 12.

The materials for the activating permanent magnets 13, 14, 15 and for the cores 27 of the activating electromagnets 45, 27 are selected with other basis, which are not discussed here, because any standard or new solution can be useful.

Next e.g. a photoresist or a respective film forming coating is provided on the coating 31 of the magnetic alloy, the configuration of the intended magnetic elements 12 are exposed and the areas of the photoresist or the respective film for the gaps 4 and the possible slit 18 are washed off, whereupon a protective mask, that is strips of the hardened photoresist or film, is left on the areas the magnetic elements 12, and sheets of the hardened photoresist or film, is left on each possible end area A1, A2. The materials and processes for this step are generally known and commercially available, and so they are not explained in detail and not shown in the figures. Following this protecting step the magnetic material is etched away from areas of the gaps 4 and the slit 18 using some applicable etching process. As can be understood from Figs. 4 to 9B and 15 areas of direct lines 32 or curved lines 32 or a meander line 32 are etched through said coating 31 of magnetic material so that an intermeshing configuration of the magnetic elements 12 remains on said first surface 40a of the resistant layer 33. This etching can be a chemical or wet etching technique, or dry etching technique. It is believed that dry etching techniques would be preferable, because when using these techniques the under-etching of the mask is easily avoided and a high packing density with narrow gaps 4 and slit 18 as well as narrow magnetic elements 12 is attained also when the thickness H of the ferromagnetic material coating 31 is large. Dry etching enable attaining a considerably smaller widths W1, W2, W3 of the magnetic elements 12, the gaps 4 and the slit 18 respectively than the thickness H of coating 31 of the magnetic materials, and also attaining substantially even walls perpendicular to the first surface 40a for the magnetic elements 12. There are various specialized techniques of the dry etching, like reactive gas etching, laser assisted etching, glow discharge etching including plasma etching, reactive ion etching etc., and ion beam methods including further alternatives. The etching techniques are known and one of those commercially available can be selected, or a new version can be developed.

After the etching of magnetic material the etch resistant film is stripped away using a known or a new method and then the bar-like magnetic elements 12 are bare for further process steps, and the possible end areas A1, A2 are bare as well for providing contact with the permanent magnet(s) or electromagnet(s), which contact is created by attaching the magnet(s) on the end areas during assembly of the sensor.

As an optional next step at least the inner area A*, or preferably the area limited by the envelope line through the outmost points of bar-like magnetic elements 12 is coated with a second non-ferromagnetic material 35, which preferably is also electrically insulating. The area of the possible slit 18 is excluded so as the possible end areas A1, A2, and so the slit 18 and the end areas are not coated with this second non-ferromagnetic 35. For this purpose the slit and end areas shall be protected e.g. by a photoresist or some other type of film as described above. The mentioned second material 35 can be an oxide, a carbide, or a nitride, like SiO₂, Al₂O₃, SiC etc.

This step of the procedure is used if the alternative or following step does not produce a proper filling of the gaps 4 in the reflective grating 1 and spacings 16 in the transmissive grating 1 so that e.g. air pockets remains in these gaps or spacings. Of course those gaps 4 forming the slit 18 shall not be filled with the second material, which can be understood from Fig. 14. For this purpose the coating process for this described step is selected from those gas phase deposition techniques, and those liquid phase deposition techniques disclosed above in this text. The structure respective to this stage is visualized in Fig. 13B, illustrating the bar-like magnetic elements 13 on the resistant layer 33 and further with the deposited second material 35 thereon. In any case the procedure further comprises the step filling at least the inner area A*, or preferably the area limited by the envelope line through the outmost points of bar-like magnetic elements 12 which can have a coating of the second material 35, excluding the area of the possible slit 18 and the possible end areas A1, A2, with a non-ferromagnetic carrying layer 36. The carrying layer 36 consists e.g. of some polymer which have low enough viscosity when not polymerized so that it can be poured onto said areas and fills the recess corners of the gaps or spacings properly, can be polymerized and have a necessary strength and rigidity in the final polymerized state. It is believed that epoxy resin is one of the advantageous alternatives. For this latter step too, the slit 18 and end areas A1, A2 shall be protected with parts, not shown in the figures, thicker than the carrying layer, the thickness of the carrying layer is not critical and can vary within wide limits. These protective parts shall be removable later, that is after polymerization of the carrying layer 36, which removing can be done e.g. by melting, in which case the parts shall have a low melting point, or by dissolving in a proper solvent. The carrying layer 36 serves as the strengthening structure of the gaseous optical grating 1. Another alternative, instead of using protective parts for the end areas is to install and attach the permanent magnet(s) or the electromagnet(s) against the end areas A1, A2 before filling with the polymer, whereupon the magnet(s) are/is attached to carrying layer 36 too.

Uncovering a second surface 40b of the resistant layer opposite to the first surface 40a thereof follows next. The uncovering can be done with an etching applicable to remove the material of the substrate 30, and accordingly one of the etching methods mentioned above can be selected. It is believed that chemical etching is useful to most substrate materials, like e.g. to the silicon substrate 30 of the SOI disc.

Applying a reflective coating 34 on said second surface 40b of the resistant layer 33 is the latest step in case a reflective gaseous optical grating 1 is under manufacturing. The reflective coating 34, which forms the mirror-reflective surface 23, shall consist of a non-ferromagnetic material, and is metallic aluminium or preferably gold. Gold is the best alternative, because it does not react with any gas normally present in the gas mixture Gm, like air, inhaled or exhaled gas compositions of a patient, usual exhaust gases from motors, or in the liquids possibly condensed from the gas mixture Gm to be measured. So a gold coating keeps its reflective properties unchanged for a long time. Because the reflective coating 34 is non-transparent to radiation R_{E}, R_{D}, there are no requirements concerning the transparency or non-transparency of the non-ferromagnetic material 35 or 36 in the gaps 4 in respect to the radiation used in this case. For applying the reflective coating 34 some of the gas phase deposition techniques, or some of the liquid phase deposition techniques can be used. In case a transmissive gaseous optical grating 1 is under manufacturing, a coating 41 which is preferably radiation absorbing and/or perhaps diffusively reflective, i.e. preferably non-reflective, may be applied, but if the second material 35 and/or the carrying layer 36 are/is non-transparent to the used radiations R_{E}, R_{D} no coating is needed. Accordingly the outer surface 37 is formed either by the non-reflective coating 41 or by the combination of the outer surfaces of the magnetic elements 12 and the second material 35 or the portions of the carrying layer 36 present in the gaps 4 - in case of reflective grating, and in the spacings 16 - in case of transmissive grating. The thickness B2 of the reflective coating 34 and the optional non-transparent coating 41 should be as small as possible, preferably less than 10% of the grating separation ***a***, yet as opaque and non-transparent as possible in order to avoid undesired diffraction from the periodic magnet structure below. It is believed that a metallic coating 34 having a thickness of smaller than 10 µm can be easily prepared, and thickness of smaller than 5 µm, or thickness of smaller than 2 µm can also be attained.

## Claims

1. A sensor for measuring the content of a paramagnetic gas component (Gp) in a gas mixture (Gm), the sensor comprising: at least one magnet having at least a gap (4) between the opposite magnetic poles (N, S) of the magnet; and a magnetic field (3) in said gap influencing behaviour of the sample gas mixture, **characterized in that** the sensor comprises:
- an inner area (A*) in said sensor;
- a plurality of said gaps (4) in an repetitive array exhibiting successive pairs of said opposite magnetic poles (N and S) with said gap therebetween one after the other along said inner area;
- a radiation source (7) emitting an electromagnetic radiation (R_{E}) towards said inner area (A*); and
- at least a first radiation detector (8) sensitive to said radiation and aimed to said inner area for receiving the diffracted radiation (R_{D}) from a gaseous optical grating (1) effected by a series (10) of magnetic fields (3) in the array of said gaps (4).

2. A sensor according to claim 1, **characterized in that** the sensor:
- is an open room (5b), whereupon said inner area (A*) with the series (10) of magnetic fields (3) is freely accessible by the environmental gas mixture (Gm); or
- further comprises: a housing (24) having a measuring cavity (5a) with an input conduit (19) for supplying sample gas mixture (Gm) and an output conduit (20) for exiting of the sample gas mixture; said inner area (A*) with the series (10) of magnetic fields (3) being inside the cavity; and at least one window (6) between said inner area (A*) and the radiation source (7) and/or first radiation detector (8).

3. A sensor according to claim 1, **characterized in that** for forming a transmissive gaseous optical grating (1):
- in said sensor the plurality of said gaps (4) between the opposite magnetic poles (N and S) are a single continuous slit (18) transparent to said radiation (R_{E}, R_{D}); and
- the sensor comprises a first and a second set (21a, 21b) of several magnetic elements (12) along both sides of the slit; said magnetic elements having spacings (16) therebetween; each magnetic element in said first set (21a) providing a magnetic pole (N or S) to the slit and each magnetic element in said second set (21b) providing an opposite magnetic pole (N or S) to the slit, whereupon said opposite poles at both sides of the slit configure a series (10) of magnetic fields (3) along the slit (18).

4. A sensor according to claim 1, **characterized in that** for forming a reflective gaseous optical grating (1):
- in said sensor the plurality of the gaps (4) between opposite magnetic poles (N and S); and
- the sensor comprises at least one set (21c) of several longitudinal magnetic elements (12) extending between the gaps (4) and providing opposite magnetic poles (N and S) to each one of the gaps so that magnetic field direction alternates or is constant in successive gaps (4), whereupon a series (10) of magnetic fields (3) is configured by said repetitive array; and an even outer mirror-reflective surface (23).

5. A sensor according to any of claims 1 to 4, **characterized in that** said several magnetic elements (12) providing said magnetic poles (N and S) to said plurality of gaps (4) have a linear configuration and are parallel to each other; and that said gaps (4) have a substantially constant width (W1) and a substantially constant interval (W2).

6. A sensor according to any of claims 1 to 4, **characterized in that** said several magnetic elements (12) providing said magnetic poles (N and S) to said plurality of gaps (4) have a generally concentrically curved configuration, whereupon a virtual concave mirror (26) concentrating the diffracted radiation is formed by said magnets; and that said gaps (4) have a variable width (W1) and/or a variable interval (W2) in a direction (D) transversal the length (L) thereof.

7. A sensor according to any of claims 1 to 6, **characterized in that**:
- said magnetic elements (12) are of a soft magnetic material, and each of the end areas (A1 and A2) directed away from said inner area (A*) of the intermeshing magnetic elements (12) are in contact with an activating magnet or activating magnets; and that
- the activating magnet(s) magnetizing said magnetic elements are one or several permanent magnets (15; 13, 14), or one or several electromagnets (27, 45); and that
- those ends (25) of the activating magnets directed away from said contact with said end areas are optionally connected with a bridge (17) of a soft magnetic material.

8. A sensor according to any of claims 1 to 6, **characterized in that** said magnetic elements (12) are of a hard magnetic material, which elements are magnetized to form a plurality of permanent magnets.

9. A sensor according to any of claims 1 to 8, **characterized in that** the sensor further comprises optical means (11) concentrating the diffracted radiation, said optical means being a convex lens (39) of a refractive material positioned between the gaseous grating (1) and the detector (8).

10. A sensor according to any of the preceding claims, **characterized in that** said gaseous optical grating (1) caused by the series (10) of magnetic fields (3) in the array of successive gaps (4) with magnetic poles (N, S) has an grating separation (***a***) of at least 2 µm and at maximum 200 µm; and that the width (W3) of said slit (18) is at least 0.02 mm and at maximum 0.5 mm.

11. A sensor according to any of the preceding claims, **characterized in that** said first radiation detector (8) is positioned at the point of a subsidiary maximum (M₋₁, or M₊₁) or at the area of two or more subsidiary maximums (M_{-1, 2, 3...}, or M_{+1, 2, 3...}) of the diffracted radiation (R_{D}); and that the sensor further comprises a second radiation detector (9) sensitive to said radiation, the second detector being positioned to receive the scattered radiation (R_{SC}) outside the principal maximum (M_{P}) and the subsidiary maximums (M₋₁, M₋₂ etc., or M₊₁, M₊₂ etc.) of the diffracted radiation.

12. A sensor according to any of claims 1 to 7, or 9 to 11, **characterized in that** the sensor further comprises means (30) for providing a chopped DC-current (I_{C}) to electromagnet(s) creating said opposite magnetic poles (N and S), and means (22) for processing the signal (T1, T2) at least from the first radiation detector (8) with a frequency (ω) respective to said chopping.

13. A sensor according to any of the preceding claims, **characterized in that** said radiation source (7) is a diode laser, a light emitting diode, or a laser; and that the wavelength (λ) of the emitted radiation (RE) is between 500 nm and 1000 nm.

14. A sensor according to any of claims 3 to 13, **characterized in that**:
- in the reflective gaseous optical grating (1) the combination of the magnetic elements (12) and the gaps (4) therebetween is non-transparent to the used radiation (R_{E}, R_{D}), and have a reflective coating (34); and
- in the transmissive gaseous optical grating (1) the combination of the magnetic elements (12) and the spacings (16) therebetween is non-transparent to the used radiation (R_{E}, R_{D}).

15. A method for measuring the content of a paramagnetic gas component (Gp) in a gas mixture (Gm) by introducing said gas mixture through the sensor and by detecting the behaviour of said gas component under the influence of a magnetic field, **characterized in that** the method comprises the steps of:
- allowing said gas mixture (Gm) to flow through a series (10) of a plurality of magnetic fields (3) provided along an area (A*) in said sensor;
- directing a beam of an electromagnetic radiation (R_{E}) to a layer (P) of said flowing gas mixture forming a gaseous optical grating (1) under the influence of said series (10) of magnetic fields (3) in said area, whereupon said radiation is diffracted by said gaseous optical grating; and
- detecting at least one subsidiary maximum (M₋₁, or M₊₁) of said diffracted radiation (R_{D}) originating at said layer of the gas mixture.

16. A method according to claim 15, **characterized in that** the method further comprises the step of directing a substantially monochromatic radiation (R_{E}) with a wavelength (λ) of 500 nm to 1000 nm into said layer (P) including the gaseous optical grating (1).

17. A method according to claim 15 or 16, **characterized in that** the method further comprises the step of forming said series (10) of magnetic fields effecting the gaseous optical grating (1) by successively positioning opposite poles (N and S) of a plurality of magnetic elements (12):
- for a set (21c) of unidirectionally intermeshing opposite poles (N, S) with radiation non-transparent gaps (4) therebetween; or
- for two sets (21a, 21b) having poles (N or S) facing the opposite poles (S or N) on the other sides of a radiation transparent slit (18).

18. A method according to any of the claims 15 to 17, **characterized in that** the method further comprises the steps of:
- allowing said electromagnetic radiation (R_{E}) to reflect from an outer even surface (23) positioned within or below said series (10) of a plurality of magnetic fields;
- detecting the intensity of one or several of the subsidiary maximums (M₋₁, or M₊₁; or M_{-1,2,3}..., or M_{+1,2,3}...); and
- calculating the content of the paramagnetic gas component (Gp).

19. A method according to any of the claims 15 to 17, **characterized in that** the method further comprises the steps of:
- allowing said electromagnetic radiation (R_{E}) to transmit through a slit (18) including a series (10) of magnetic fields;
- detecting the intensity of one or several of the subsidiary maximums (M₋₁, or M₊₁; or M_{-1, 2, 3...}, or M_{+1, 2, 3...}); and
- calculating the content of the paramagnetic gas component (Gp).

20. A method according to the claim 16 or 19, **characterized in that** the method further comprises the step of detecting the intensity of scattered stray radiation (R_{SC}) and correcting either the value initially detected from the subsidiary maximum(s) or the initially calculated content of the paramagnetic gas component.

21. A procedure for manufacturing magnets having a gap between the opposite magnetic poles (N and S) thereof and influencing a paramagnetic gas component (Gp) of a gas mixture (Gm) in a measuring sensor, **characterized in that** the procedure comprises the steps of:
- providing a substrate (30) with a first non-ferromagnetic layer (33) resistant to etching thereon, said layer having a first surface (40a) accessible;
- applying a coating (31) of a ferromagnetic material on said first surface of said resistant layer (33);
- etching direct or curved lines (32) or a meander line (32) through said coating of ferromagnetic material so that an intermeshing configuration of the magnetic elements (12) remains on said first surface of the resistant layer;
- uncovering a second surface (40b) of the resistant layer opposite to the first surface (40a) thereof; and
- applying a reflective coating (34) on said second surface (40b) of the resistant layer.

22. A procedure according to claim 21, **characterized in that** prior to said uncovering step, the procedure further comprises an optional step of at least a first area A* of said magnetic elements (12) excluding a possible slit (18) is coated with a second non-ferromagnetic material (35).

23. A procedure according to claim 21 or 22, **characterized in that** prior to said uncovering step, the procedure further comprises the step of least a first area A* of said magnetic elements (12) excluding a possible slit (18) is provided with a non-ferromagnetic carrying layer (36).

24. A procedure according to any claims 21 to 23, **characterized in that** said magnetic material (31) is a soft magnetic material; and that the procedure further comprises the step of:
- coating each end area (A1, A2) common to one set (21a, 21b) of magnetic elements (12) with an etch-resistant film before said step of etching magnetic material; and
- stripping said etch-resistant film after said step of etching magnetic material, for providing contact for permanent magnets (13, 14; 15).

25. A procedure according to any claims 21 to 23, **characterized in that** said magnetic material (31) is a hard or a soft ferromagnetic material; and that the procedure further comprises the step of positioning said intermeshing configuration of the magnetic elements (12) within an electrical coil (38) either for a permanent magnetization of said elements, or for a periodical magnetization of said elements.

26. A procedure according to any claims 21 to 25, **characterized in that** said reflective coating (34) is metallic gold or aluminium.

27. A procedure according to any claims 21 to 25 or 26, **characterized in that** the procedure further comprises the step of:
- attaching a permanent magnet (15) or permanent magnets (13, 14) against both end areas (A1, A2), one area of which is common to one set (21a or 21b) of the intermeshing magnetic elements (12); or
- attaching an electromagnet (27, 45) against both end areas (A1, A2), one area of which is common to one set (21a or 21b) of the intermeshing magnetic elements (12).

28. A procedure according to any claims 21 to 27, **characterized in that** said substrate (30) is silicon or germanium, and said non-magnetic layer (33) resistant to etching is an oxide, a carbide, or a nitride of silicon or germanium, or aluminium oxide.

29. A procedure according to claim 21 or 28, **characterized in that** in the procedure the step of:
- applying the coating (31) of the magnetic material, applying the reflective coating (34) utilizes either one of the gas phase deposition techniques or one of the liquid phase deposition techniques; and
- uncovering the second surface (40b) of said resistant layer (33) utilizes chemical etching.
